# EUROPÄISCHE PATENTSCHRIFT

(11) **EP 0 358 878 B1**
(45) Veröffentlichungstag und Bekanntmachung des Hinweises auf die Patenterteilung: **29.09.1993**
(21) Anmeldenummer: 89112744.1
(22) Anmeldetag: 12.07.1989
(51) Int. Cl.: A01C 7/12

(54) **Dosiervorrichtung für eine Verteilmaschine**
Dosing device for a distributing machine
Dispositif doseur pour une machine à distribuer

(30) Priorität: 07.09.1988 DE 8811286 U
(43) Veröffentlichungstag der Anmeldung: 21.03.1990
(73) Patentinhaber: Rabewerk GmbH + Co., 49152 Bad Essen (DE)
(72) Erfinder: Gehrke, Rudolf, Dipl.-Ing., D-2990 Aschendorf (DE); Pleyer, Peter, D-4515 Bad Essen (DE)
(74) Vertreter: Missling, Arne, Dipl.-Ing.

(56) Entgegenhaltungen:
- EP-A- 0 094 583
- EP-A- 0 142 480
- EP-A- 0 209 062
- AU-A- 13 353
- DE-C- 166 059
- DE-C- 837 022
- FR-A- 2 333 431
- FR-A- 2 509 954
- GB-A- 1 509 880

## Beschreibung

Die Erfindung betrifft eine Dosiervorrichtung für eine Verteilmaschine mit zumindest einem Grob- oder Normaldosierrad und einem Feindosierrad, welche drehbar in einem Gehäuse gelagert und mittels einer Dosierwelle wahlweise antreibbar sind.

Bei Sämaschinen oder Düngerverteilmaschinen ist es erforderlich, das Saatgut so zu dosieren, daß aus dem jeweiligen Verteilrohr eine exakte, vorbestimmbare Menge an Fördergut pro Fahrtstrecke der Verteilmaschine abgegeben wird. Es muß somit möglich sein, eine vorbestimmte Menge an Fördergut gleichmäßig auf eine bestimmte zu bearbeitende Fläche aufzubringen.

Um den Anforderungen eines landwirtschaftlichen Betriebes genügen zu können, ist es erforderlich, daß eine Verteilmaschine für verschiedenstes Saat - bzw. Düngersorten einsetzbar ist, welches verschiedene Korngrößen aufweist, beispielsweise für verschiedene Getreidearten oder auch für sehr feines Saatgut, wie beispielsweise Raps, bzw. bei Düngemittelverteilern für grobes oder feines Granulat.

Aus dem Stand der Technik sind vielfältige Lösungsmöglichkeiten bekannt, welche dazu dienen sollen, eine Dosiervorrichtung der jeweiligen Korngröße und der Menge an aus zubringendem Gut anzupassen. Aus der DE-PS 423 906 ist es beispielsweise bekannt, ein Särad mittels einer über schiebbaren Muffe teilweise abzudecken, um auf diese Weise die Größe der Zellen und damit das geförderte Volumen an Saatgut zu verändern. In ähnlicher Weise ist es aus der DE-OS 22 32 852 bekannt, den mit Zellen versehenen Bereich eines Särades durch Verschieben außer Eingriff von dem Saatgut zu bringen. Diese Lösungen weisen den Nachteil auf, daß zwar bei einer bestimmten Saatgutgröße eine Veränderung der Fördermenge vorgenommen werden kann, daß jedoch insbesondere bei feinem Saatgut die Einstellung der Fördermenge sehr ungenau ist und zu keinem brauchbaren Ergebnis führt.

Aus der US-PS 1 844 172 ist es bekannt, ein Dosierrad unterschiedlicher Zellengröße zu verwenden, wobei durch seitliches Verschieben des Dosierrades jeweils größere bzw. kleinere Zellen mit dem Fördergut in Kontakt kommen. Diese Ausgestaltungsform ist sehr kompliziert aufgebaut und gestattet, insbesondere hinsichtlich der Abdichtungsprobleme, nur eine begrenzte Anpassung an verschieden großes Saatgut.

Aus dem Stand der Technik ist es weiterhin bekannt, zwei verschiedene Säräder zu verwenden, wobei eines als Normalsärad und das andere als Feinsärad ausgebildet ist. Eine derartige Ausgestaltungsform ist beispielsweise aus der EP-Al-210 516 oder DE-PS 837 022 bekannt. Dabei ist jeweils das Feinsärad drehfest mit einer Dosierwelle verbunden, während das Normalsärad wahlweise zusätzlich drehfest mit der Dosierwelle koppelbar ist, wobei sich dann beide Säräder gemeinsam drehen. Die drehfeste Kopplung des Normalsärades erfolgt durch einen Steckbolzen, welcher in dem Normalsärad geführt ist und in eine Ausnehmung des Feinsärades einbringbar ist. Diese Lösung weist den Nachteil auf, daß es nicht möglich ist, nur das Normalsärad zu benutzen, da das Feinsärad stets mit der Dosierwelle in Eingriff ist. Dadurch ergeben sich insbesondere bei Verwendung grobkörnigeren Saatguts ungleichmäßige Dosierungen, da dieses im Bereich des Feinsärades die kleinen Zellen unregelmäßig füllt. Außerdem verschleißen die Feindosierräder schneller, weil sie immer arbeiten, bzw. werden sie durch sehr grobes und hartes Fördergut beschädigt.

Der Erfindung liegt die Aufgabe zugrunde, eine Dosiervorrichtung der eingangs genannten Art zu schaffen, welche bei einfachem Aufbau und betriebssicherer Wirkungsweise eine exakte Dosierung sowohl von grobkörnigem als auch von sehr feinkörnigem Gut ermöglicht und welche auf einfache und betriebssichere Weise einstellbar ist.

Erfindungsgemäß wird die Aufgabe dadurch gelöst, daß die Dosierwelle in axialer Richtung relativ zu den Dosierrädern und dem Gehäuse verschiebbar ist und zumindest ein Kupplungselement umfaßt, welches wahlweise mit den Dosierrädern in Eingriff bringbar ist.

Die erfindungsgemäße Dosiervorrichtung zeichnet sich durch eine Reihe erheblicher Vorteile aus. Da erfindungsgemäß die Dosierräder drehbar, aber nicht verschiebbar in dem Gehäuse gelagert sind, ergibt sich der Vorteil, daß, angepaßt an die Größe des jeweils zu verarbeitenden Saatguts, optimale Förder-und Strömungseigenschaften gewährleistet sind, welche nicht durch das Mitlaufen eines nicht geeigneten Dosierrades beeinträchtigt werden.

Durch die Möglichkeit, die zumindest zwei Dosierräder wahlweise mit der Dosierwelle zu verbinden, kann die Leistung der Verteilmaschine auf besonders einfache Weise den jeweiligen Anforderungen angepaßt werden. Die Verschiebung der Dosierwelle ist auch für eine ungeübte Bedienungsperson leicht zu bewerkstelligen und stellt in technischer Hinsicht, insbesondere hinsichtlich der Abdichtung des das Saatgut enthaltenden Gehäuses kein Problem dar.

Ein weiterer wesentlicher Vorteil der erfindungsgemäßen Dosiervorrichtung, welcher sich aus der nichtverschiebbaren Anordnung der Dosierräder ergibt, liegt darin, daß eine Einstellung auch dann vorgenommen werden kann, wenn der Saatkasten der Verteilmaschine mit Saatgut gefüllt ist. Dabei kann kein Verklemmen durch das Saatgut auftreten, da eine Verstellung lediglich durch die Verschiebung der Dosierwelle erfolgt, welche nicht mit dem Saatgut in Berührung kommt.

In einer besonders günstigen Weiterbildung der Erfindung ist das Kupplungselement in Form eines Mehrkantprofils ausgebildet, welches sich über einen vorgegebenen axialen Bereich der Dosierwelle erstreckt, wobei der Nabenbereich jedes Dosierrades mit einer zu dem Mehrkantprofil passenden Ausnehmung versehen ist. Eine drehfeste Verbindung zwischen der Dosierwelle und dem jeweiligen Dosierrad kann somit in einfacher Weise dadurch erfolgen, daß das Mehrkantprofil der Dosierwelle in die Ausnehmung des Dosierrades eingeschoben wird. Bei dieser Ausgestaltungsform ist es besonders einfach möglich, eine exakte Kupplung oder Entkupplung der einzelnen Dosierräder vorzunehmen. Weiterhin zeichnet sich diese Ausgestaltungsform dadurch aus, daß die Herstellung des Kupplungselementes sehr kostengünstig erfolgen kann und ein hohes Maß an Betriebssicherheit, insbesondere Verschleißfestigkeit, aufweist.

Um insbesondere bei Verwendung der erfindungsgemäßen Dosiervorrichtung in Verbindung mit einer pneumatischen Sävorrichtung eine gleichmäßige Ausbringung des Sägutes sicherzustellen, kann es sich als günstig erweisen, nebeneinander zwei Normalsäräder vorzusehen, an deren außenliegenden Stirnseiten jeweils ein Feinsärad angeordnet ist. Diese Ausgestaltungsform zeichnet sich insbesondere durch den symmetrischen Aufbau aus, welcher sicherstellt, daß das Sägut über die gesamte zur Verfügung stehende Breite in gleichmäßiger Weise gefördert oder abgegeben wird. Es kommt somit insbesondere bei Verwendung in einer pneumatischen Säeinrichtung nicht zu dem Effekt, daß, wie beim Stand der Technik, das Saatgut bevorzugterweise seitlich gegen eine Wandung eines Förderrohrs gedrückt und damit bevorzugt nur einigen der nachfolgenden Verteilrohre bzw. Säschare zugeführt wird.

Um die Förderung des Saatgutes zu vergleichmäßigen und um insbesondere einen gleichmäßigen Saatgutstrom unabhängig von des jeweiligen Drehwinkel des Dosierrades abzugeben, kann es sich als vorteilhaft erweisen, wenn die Säräder, welche an ihrer Außenseite bevorzugterweise mit sich axial erstreckenden Zellen versehen sind, so zueinander angeordnet sind, daß sie jeweils um die halbe Teilung der Zellen versetzt sind. Dabei können die benachbarten Grob- oder Normalsäräder drehfest miteinander verbunden sein. In gleicher Weise kann es günstig sein, daß die Feinsäräder im Fall bezüglich ihrer Zellen um eine halbe Teilung versetzt zueinander positioniert sind. Eine weitere vorteilhafte Maßnahme zur Vergleichmäßigung des Saatgutstromes besteht darin, die Zellen gegenüber der Achse zu verschränken, ähnlich einer Schrägverzahnung. Da erfindungsgemäß das Kupplungselement in Form eines Mehrkantprofiles, beispielsweise eines Sechskantprofiles ausgebildet ist, ist es durch entsprechende Zuordnung und Ausgestaltung der Ausnehmungen im Nabenbereich der Feinsäräder ohne Probleme möglich, diese um die halbe Teilung versetzt zueinander zuzuordnen.

Um bei mehreren Särädern diese wahlweise mit der Dosierwelle in Eingriff bringen zu können, erweist es sich als besonders günstig, wenn die Dosierwelle zwei voneinander beabstandete Kupplungselemente aufweist und in drei Positionen in axialer Richtung verschiebbar oder einstellbar ist, so daß entweder nur die Normalsäräder oder nur ein Feinsärad oder beide Feinsäräder drehfest mit der Dosierwelle verbunden sind. Durch lediglich drei Einstellmöglichkeiten ist es somit möglich, die erfindungsgemäße Dosiervorrichtung sowohl an die zu erzielende Fördermenge, als auch an die Art und insbesondere an die Korngröße des Saatgutes anzupassen. Dabei kann die Anpassung der Dosiervorrichtung, da die Säräder nicht verschoben werden müssen, auch bei gefülltem Saatkasten erfolgen. Weiterhin ist es für die Bedienungsperson besonders einfach möglich, die Einstellung durch eine Verschiebung der Dosierwelle vorzunehmen und die jeweilige Einstellung zu überprüfen.

Um eine Beeinflussung der Zellen benachbarter Säräder zu vermeiden, kann es günstig sein, daß zwischen benachbarten Särädern Scheiben angeordnet sind. Diese stellen insbesondere dann eine sichere Trennung dar, wenn lediglich eines oder einiger der Säräder mit der Dosierwelle gekoppelt sind, während die anderen Säräder stillstehen und nicht an dem Dosiervorgang beteiligt sind.

Um zu verhindern, daß die Säräder, welche bei der jeweiligen Einstellung entkoppelt sind und nicht durch die Dosierwelle angetrieben werden, durch Reibungsvorgänge oder ähnliches in Drehung versetzt werden und den Dosiervorgang stören können, kann es erfindungsgemäß günstig sein, am Gehäuse zumindest ein Federelement anzuordnen, dessen freies Ende gegen die Säräder anliegt. Das Federelement wirkt somit bremsend und haltend auf das jeweilige Särad. Es ist auch möglich, für jedes Särad ein eigenes Federelement vorzusehen.

In einer weiteren günstigen Ausgestaltung sind die Enden der Federelemente so ausgebildet, daß sie in Form einer Reinigungskante in die Zellen des jeweiligen Särades einführbar sind, um bei einer Drehung des Särades dieses von möglicherweise anhaftendem Saatgut zu reinigen.

Bedingt durch die symmetrische Anordnung der Säräder, insbesondere der Feinsäräder ist die erfindungsgemäße Dosiervorrichtung besonders gut für die Verwendung bei einer pneumatischen Säeinrichtung geeignet, bei welcher die Säräder bevorzugterweise im Einlaßbereich eines Förderrohrs angeordnet sind. Die symmetrische Ausgestaltung stellt eine gleichmäßige Verwirbelung des Saatgutes in dem Luftstrom sicher, die aus dem Stand der Technik bekannten Nachteile, insbesondere die Tatsache, daß ein seitlich angeordnetes Feinsärad das feine Saatgut nur in eine Seite des Luftstromes einbringt, werden somit vermieden.

Zur gleichmäßigen Verteilung bzw. Vermischung des in dem Vorratskasten befindlichen Saatgutes kann es günstig sein, wenn oberhalb der Säräder in dem Gehäuse eine Rührwelle angeordnet ist.

Da erfindungsgemäß eine besonders präzise und exakte Einstellung der zu fördernden Saatmenge möglich ist, kann es sich als günstig erweisen, eine Möglichkeit zu schaffen, die eingestellte pro Flächeneinheit auszubringende Saatgutmenge vor Beginn des eigentlichen Sävorganges zu überprüfen. Zu diesem Zwecke ist erfindungsgemäß in dem Gehäuse im Auslaßbereich der Säräder zu dem Förderrohr eine Abdrehklappe vorgesehen, durch welche das Saatgut beim Abdrehen der Dosiereinrichtung, beispielsweise von Hand, in einen Behälter geleitet und anschließend gewogen werden kann.

Um zusätzlich zu der Anpassung der Fördermenge durch die Auswahl des geeigneten Särades eine exakte Steuerung der erfindungsgemäßen Dosiereinrichtung vornehmen zu können, kann vorgesehen sein, daß die Dosierwelle mit veränderbarer Drehzahl antreibbar ist.

Erfindungsgemäß ist somit die Möglichkeit geschaffen, entweder durch Inbetriebnahme nur der beiden Normalsäräder oder der beiden Feinsäräder eine geeignete Menge an Saatgut zu dosieren. Da es weiterhin möglich ist, nur eines der beiden Feinsäräder separat anzutreiben, kann die Dosiervorrichtung zur Durchführung einer Feinsaat besonders präzise eingestellt und betrieben werden.

Da eine Verstellung erfindungsgemäß nur durch eine Verschiebung der Dosierwelle erfolgt, ergeben sich nicht die aus dem Stand der Technik bekannten Abdichtprobleme, vielmehr ist es möglich, das Dosiergerät, das Unterteil des Gehäuses und das Förderrohr zu einer Einheit zusammenzufassen.

Die vorstehenden Ausführungen für Sämaschinen gelten gleichermaßen for Düngerstreuer.

Im folgenden wird die Erfindung anhand eines Ausführungsbeispiels in Verbindung mit der Zeichnung beschrieben. Dabei zeigt:
- Fig. 1: eine Querschnittansicht eines Ausführungsbeispiels eines Saatkastens mit der erfindungsgemäßen Dosiereinrichtung;
- Fig. 2: Längsschnittansicht durch die in Fig. 1 gezeigte Anordnung; und
- Fig. 3 bis 5: Teilschnittansichten durch die in Fig. 2 dargestellten Säräder, jeweils in verschiedenen Betriebszuständen.

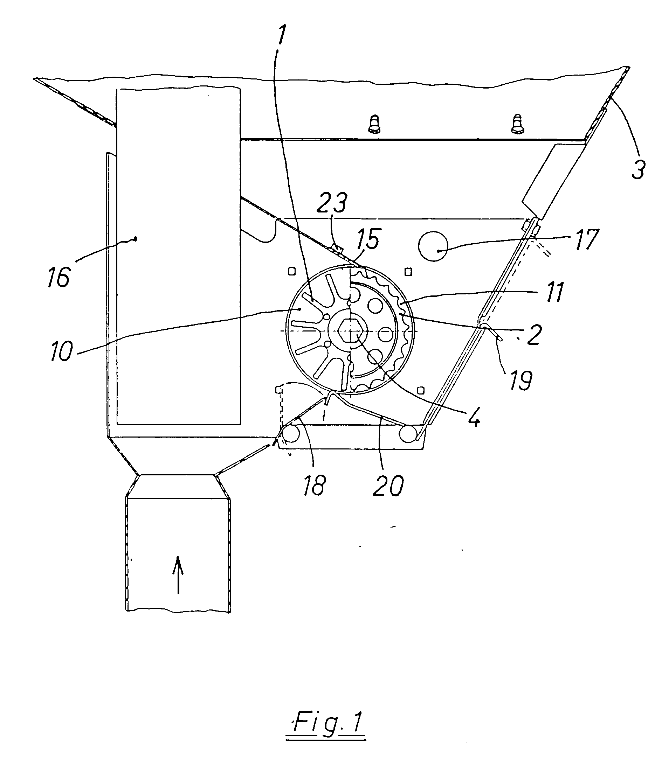

In Fig. 1 ist in eine Querschnittsansicht ein Gehäuse 3 eines Saatkastens dargestellt, in dessen mittlerem Bereich eine Dosierwelle 4 angeordnet ist, auf der, wie in den nachfolgenden Figuren im einzelnen gezeigt, zumindest ein Grob- oder Normalsärad 1 und ein Feinsärad 2 gelagert sind. Zur Verdeutlichung der Erfindung wurde in Fig. 1 jeweils eine Hälfte des Normalsärades 1 und des Feinsärades 2 dargestellt.

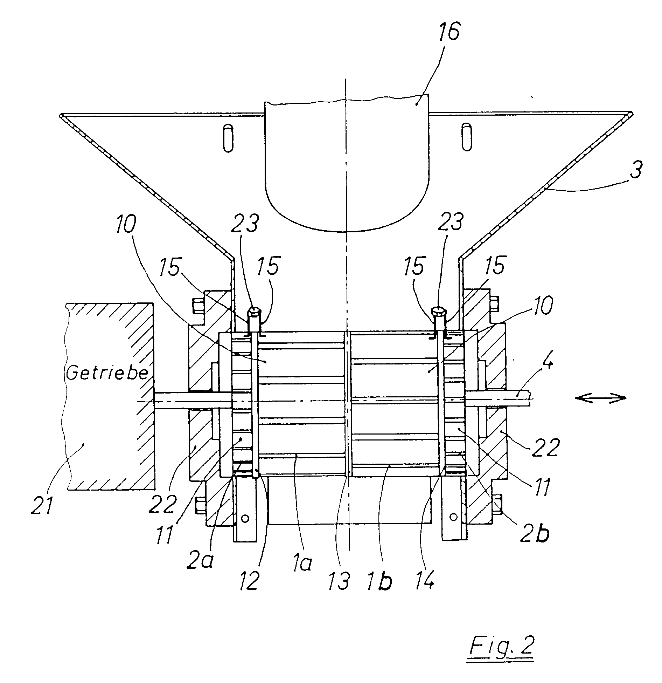

Die Fig. 2 zeigt eine Längsschnittansicht durch die Anordnung gemäß Fig. 1. Die Dosierwelle 4 ist, wie durch den doppelten Pfeil dargestellt, in axialer Richtung verschiebbar und ist über ein nur schematisch dargestelltes Getriebe 21 antreibbar. Eine Lagerung der Dosierwelle an dem Gehäuse 3 erfolgt mittels seitlicher Lagerschalen 22, welche an dem Gehäuse 3 angeflanscht sind und mit einer Lagerung, beispielsweise einer Gleitlagerung, ausgestattet sind, welche eine seitliche Verschiebung der Dosierwelle 4 ermöglicht.

Wie insbesondere aus Fig. 2 ersichtlich, sind erfindungsgemäß zwei Normalsäräder 1a, 1b vorgesehen, welche jeweils stirnseitig an einer zentrischen Scheibe 13 anliegen. Die beiden Normalsäräder 1a, 1b weisen, wie aus Fig. 1 ersichtlich ist, Zellen 10 auf, welche sich in axialer Länge über die Säräder 1a, 1b erstrecken. Die Zuordnung der beiden Säräder 1a, 1b zueinander ist so gewählt, daß diese jeweils in die halbe Teilung der Zellen 10 versetzt sind. Dies führt zu einem besonders gleichmäßigen Austrag des Saatgutes. An den äußeren Stirnfläche der beiden Säräder 1a, 1b sind wiederum Scheiben 12, 14 angeordnet, welche die Normalsäräder 1a, 1b von den Feinsärädern 2a, 2b trennen, welche an der jeweils anderen Seite der Scheiben 12, 14 angeordnet sind. Wie aus Fig. 1 ersichtlich, weisen auch die Feinsäräder 2a, 2b jeweils Zellen 11 auf, welche sich ebenfalls in axialer Länge über die gesamte Breite der Säräder erstrecken. Auch die beiden Feinsäräder 2a, 2b sind zueinander so angeordnet, daß sie um die halbe Teilung der Zellen 11 versetzt sind.

Wie in Fig. 1 dargestellt, weisen die Zellen 10, 11 jeweils eine unterschiedliche Tiefe bzw. ein unterschiedliches Volumen auf, so daß die Menge des geförderten Saatgutes unter Verwendung eines bevorzugt stufenlosen Getriebes exakt anpaßbar ist.

Oberhalb der Säräder 1, 2 sind an dem Gehäuse 3 jeweils Federelemente 15 gelagert, deren freie Enden gegen die Säräder anliegen. In Fig. 2 ist besonders deutlich ersichtlich, daß die Federelemente 15 beispielsweise in Form von Drahtelementen ausgebildet sein können, welche mittels einer Schraube 23 an dem Gehäuse 3 befestigt sind. Die Federelemente 15 dienen nicht nur dazu, das jeweils nicht mit der Dosierwelle 4 gekoppelte und in Drehung versetzte Särad drehfest zu halten, vielmehr greifen die freien Enden der Federelemente 15 in die Zellen 10, 11 ein und reinigen diese von abgelagertem Saatgut.

Erfindungsgemäß ist oberhalb der Säräder 1, 2 eine Rührwelle 17 angeordnet, welche in Fig. 1 nur schematisch dargestellt ist. Unterhalb der Säräder 1, 2 ist eine Trennwand 20 angeordnet, welche in Anlage an die Säräder 1, 2 vorgespannt ist, um eine sichere Abdichtung zu gewährleisten.

Am Auslaßbereich der Säräder 1, 2 ist weiterhin ein Förderrohr 16 angeordnet, durch welches, wie mit dem Pfeil in Fig. 1 dargestellt, Luft durchgeleitet wird, in welcher das Saatgut verwirbelt und in einzelnen Särohren bzw. Dösen zugeführt wird.

Weiterhin ist am bodenseitigen Bereich des Gehäuses 3 eine Abdrehklappe 18 vorgesehen, über welche in dem in Fig. 1 durch durchgezogene Linien gezeigten geschlossenen Zustand das durch Säräder geförderte Saatgut in dem Einlaßbereich des Förderrohres 16 zugeleitet wird. Durch eine Öffnung der Abdrehklappe 18 fällt das Saatgut aus der Unterseite des Gehäuses 3 heraus und kann in einem nicht dargestellten Gefäß aufgefangen werden, um bei einem manuellen Abdrehen der Dosiervorrichtung die Einstellung der Säräder zu überprüfen und auf diese Weise zu kontrollieren, ob die jeweils geförderte Saatgutmenge der Menge entspricht, welche beispielsweise auf 1/10 ha Ackerland aufgebracht werden soll. Dies erweist sich gegenüber dem Stand der Technik als besonders einfach, da sonst die Abnahme der Probemenge nur durch Entfernen einer Injektordüse bzw. eines Leitungskrümmers unterhalb des Dosiergerätes möglich ist.

Weiterhin ist erfindungsgemäß am unteren Bereich des Gehäuses 3 ein Entleerungsschieber 19 vorgesehen, durch welchen es möglich ist, das in dem Gehäuse 3 befindliche Saatgut zur Entleerung des Gehäuses chargenweise abzuführen.

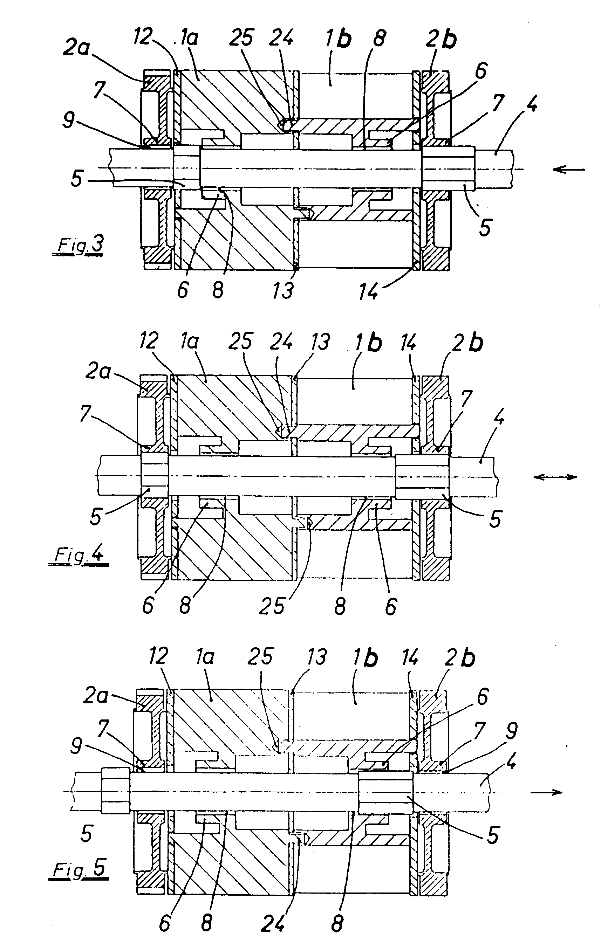

Die Fig. 3 bis 5 zeigen jeweils eine Schnittansicht der erfindungsgemäßen Ausgestaltung der Säräder, ähnlich der in fig. 2 gezeigten Ansicht.

Erfindungsgemäß ist die Dosierwelle 4 mit Kupplungselementen 5 versehen, welche sich jeweils über einen vorgegebenen axialen Längenbereich der Dosierwelle 4 erstrecken und bei dem gezeigten Ausführungsbeispiel in Form von Sechskantprofilen ausgebildet sind. Bei dem Ausführungsbeispiel sind zwei Kupplungselemente 5 unterschiedlicher Länge vorgesehen.

Die Normalsäräder 1a, 1b, welche durch die Scheibe 13 voneinander getrennt sind, sind jeweils gleichaufgebaut und mittels Zapfen 24, welche in entsprechende Ausnehmungen 25 des anderen Särades einführbar sind, drehfest miteinander verbunden. Wie in Fig. 2 gezeigt, sind die beiden Säräder zueinander um die halbe Teilung der Zellen 10 versetzt.

Die beiden Säräder weisen jeweils einen Nabenbereich 6 auf, welcher eine Ausnehmung 8 umfaßt, die so ausgebildet ist, daß das Kupplungselement 5, beispielsweise der Sechskant, passend einschiebbar ist. Die beiden Nabenbereiche 6 weisen voneinander einen Abstand auf und erstrecken sich jeweils nur über eine axiale Teillänge der Normalsäräder 1a, 1b.

Auch die beiden Feinsäräder 2 sind jeweils mit einem Nabenbereich 7 versehen, welcher eine Ausnehmung 9 umfaßt, die ebenfalls zu der Querschnittsform des Kupplungselements 5 paßt, so dieses auch in die Ausnehmung 9 einschiebbar ist.

In den Fig. 3 bis 5 sind jeweils unterschiedliche Betriebszustände der erfindungsgemäßen Dosiervorrichtung dargestellt. In Fig. 3 ist das rechte Kupplungselement in Eingriff mit dem Feinsärad 2b, so daß nur dieses angetrieben wird, während die anderen Säräder von der Dosierwelle 4 entkoppelt sind. Das in Fig. 3 auf der linken Seite dargestellte Kupplungselement 5 befindet sich in einem Bereich des Särades 1a, in welchem dieses nicht mit dem Nabenbereich 6 versehen ist.

Durch eine Verschiebung der Dosierwelle nach links läßt sich der in Fig. 4 gezeigte Betriebszustand erreichen, bei welchem beide Feinsäräder 2a, 2b mit der Dosierwelle 4 drehfest verbunden sind, während weiterhin die Normalsäräder 1a, 1b nicht von der Dosierwelle 4 angetrieben werden und somit stillstehen.

Durch eine weitere Verschiebung der Dosierwelle 4 nach links ist der in Fig. 5 gezeigte Betriebszustand erreichbar, bei welchem sich das in Fig. 5 rechts gezeigte Kupplungselement 5 in Eingriff mit der Ausnehmung 8 des Nabenbereichs 6 des rechten Normalsärades 1b befindet. Da dieses über die Zapfen 24 mit dem linken Normalsärad 1a verbunden ist, werden bei einer Drehung der Dosierwelle 4 nunmehr beide Säräder 1a, 1b angetrieben, während die beiden Feinsäräder 2a, 2b stillstehen.

## Patentansprüche

1. Dosiervorrichtung für eine Verteilmaschine, vorzugsweise Sämaschine oder Düngerstreuer, mit zumindest jeweils einem Grob- oder Normaldosierrad (1) und einem Feindosierrad (2), welche drehbar in einem Gehäuse (3) gelagert und mittels einer Dosierwelle (4) antreibbar sind, dadurch gekennzeichnet, daß die Dosierwelle (4) in axialer Richtung relativ zu den Dosierrädern (1, 2) und dem Gehäuse (3) verschiebbar ist und zumindest ein Kupplungselement (5) aufweist, das wahlweise mit den Dosierrädern (1, 2) in Eingriff bringbar ist.

2. Dosiervorrichtung nach Anspruch 1, dadurch gekennzeichnet, daß das Kupplungselement (5) in Form eines Mehrkantprofils ausgebildet ist, welches sich über einen vorgegebenen axialen Bereich der Dosierwelle erstreckt und daß der Nabenbereich (6, 7) jedes Dosierrades (1, 2) mit einer zu dem Mehrkantprofil passenden Ausnehmung (8, 9) versehen ist.

3. Dosiervorrichtung nach Anspruch 1 oder 2, dadurch gekennzeichnet, daß nebeneinander zwei Grobdosierräder (1a, 1b) vorgesehen sind, an deren außenliegenden Stirnseiten jeweils ein Feindosierrad (2a, 2b) angeordnet ist.

4. Dosiervorrichtung nach einem der Ansprüche 1 bis 3, dadurch gekennzeichnet, daß die Dosierräder (1, 2) an ihrer Außenfläche jeweils mit sich axial erstreckenden Zellen (10, 11) versehen sind.

5. Dosiervorrichtung nach Anspruch 3, dadurch gekennzeichnet, daß die Grobdosierräder (1a, 1b) drehfest miteinander verbunden sind.

6. Dosiervorrichtung nach Anspruch 4, dadurch gekennzeichnet, daß die Grobdosierräder (1a, 1b) gegeneinander um die halbe Teilung der Zellen (10) versetzt sind.

7. Dosiervorrichtung nach Anspruch 4 oder 6, dadurch gekennzeichnet, daß die Zellen (11) der Feindosierräder (2a, 2b) zueinander um eine halbe Teilung versetzt sind.

8. Dosiervorrichtung nach einem der Ansprüche 4, 6 oder 7, dadurch gekennzeichnet, daß die Zellen (10, 11) der Dosierräder (1a, 1b, 2a, 2b) schräg zur Achse (4) verlaufend ausgebildet sind.

9. Dosiervorrichtung nach einem der Ansprüche 3 bis 7, dadurch gekennzeichnet, daß die Dosierwelle (4) zwei voneinander beabstandete Kupplungselemente (5) aufweist und in drei Positionen so verschiebbar ist, daß entweder nur die Grobdosierräder (1a, 1b) oder nur ein Feindosierrad (2b) oder beide Feindosierräder (2a, 2b) drehfest mit der Dosierwelle (4) verbunden sind.

10. Dosiervorrichtung nach einem der Ansprüche 1 bis 9, dadurch gekennzeichnet, daß zwischen benachbarten Dosierrädern (1, 2) Scheiben (12, 13, 14) angeordnet sind.

11. Dosiervorrichtung nach einem der Ansprüche 1 bis 10, dadurch gekennzeichnet, daß am Gehäuse (3) zumindest ein Federelement (15) gelagert ist, dessen freies Ende gegen die Dosierräder (1, 2) anliegt.

12. Dosiervorrichtung nach Anspruch 11, dadurch gekennzeichnet, daß das freie Ende des Federelements (15) in Form einer in die Zellen (10, 11) einführbaren Reinigungskante ausgebildet ist.

13. Dosiervorrichtung nach einem der Ansprüche 1 bis 12, dadurch gekennzeichnet, daß die Dosiervorrichtung in einer pneumatischen Verteileinrichtung eingebaut ist, wobei die Dosierräder (1, 2) im Einlaßbereich eines Förder- bzw. Verteilrohres (16) angeordnet sind.

14. Dosiervorrichtung nach einem der Ansprüche 1 bis 13, dadurch gekennzeichnet, daß in dem Gehäuse (3) oberhalb der Dosierräder (1, 2) eine Rührwelle (17) angeordnet ist.

15. Dosiervorrichtung nach Anspruch 13 oder 14, dadurch gekennzeichnet, daß im Auslaßbereich der Dosierräder (1, 2) zu dem Förderrohr (16) eine Abdrehklappe (18) zum Ablassen des durch die Dosierräder (1, 2) geförderten Saatguts vorgesehen ist

16. Dosiervorrichtung nach einem der Ansprüche 1 bis 15, dadurch gekennzeichnet, daß im Einlaßbereich zu den Dosierrädern (1, 2) das Gehäuse (3) einen Entleerungsschieber, bzw. Entleerungsklappe (19) umfaßt.

17. Dosiervorrichtung nach einem der Ansprüche 1 bis 16, dadurch gekennzeichnet, daß die Dosierwelle (4) mit veränderbarer Drehzahl antreibbar ist.

18. Dosiervorrichtung nach einem der Ansprüche 1 bis 17, dadurch gekennzeichnet, daß im Ausförderbereich der Dosierräder (1, 2) eine gegen diese elastisch vorgespannte Trennwand (20) angeordnet ist.

19. Dosiervorrichtung nach einem der Ansprüche 13 bis 18, dadurch gekennzeichnet, daß das Dosiergerät, Teile des Gehäuses (3) und das Förderrohr (16) zu einer Einheit zusammengefaßt sind.

## Claims

1. A metering device for a distributing machine, preferably a sowing machine or a fertiliser distributor, with at least one coarse- or standard-metering wheel (1) and one precision-metering wheel respectively, rotatably mounted in a casing (3) and which can be driven by means of a metering shaft (4), **characterised in that** the metering shaft (4) is displaceable in the axial direction in relation to the metering wheels (1, 2) and the casing (3), and has at least one coupling member (5) which can optionally be meshed with the metering wheels (1, 2).

2. A metering device in accordance with claim 1, **characterised in that** the coupling member (5) is formed as a polygonal profile, extending over a pre-determined axial region of the metering shaft, and the hub region (6, 7) of each metering wheel (1, 2) is provided with a recess (8, 9) fitted to the polygonal profile.

3. A metering device in accordance with claim 1 or 2, **characterised in that** two coarse-metering wheels (1a, 1b) are provided next to one another, and one precision-metering wheel (2a, 2b) respectively is arranged on the external end surfaces thereof.

4. A metering device in accordance with one of claims 1 to 3, **characterised in that** the metering wheels (1, 2) are each provided with axially extending recesses (10, 11) on their external surfaces.

5. A metering device in accordance with claim 3, **characterised in that** the coarse-metering wheels (1a, 1b) are connected to one another in a rotationally rigid manner.

6. A metering device in accordance with claim 4, **characterised in that** the coarse-metering wheels (1a, 1b) are offset with respect to one another by half the spacing of the recesses (10).

7. A metering device in accordance with claim 4 or 6, **characterised in that** the recesses (11) in the precision-metering wheels (2a, 2b) are offset in relation to one another by half their spacing.

8. A metering device in accordance with one of claims 4, 6 or 7, **characterised in that** the recesses (10, 11) in the metering wheels (1a, 1b, 2a, 2b) are formed so as to extend at an angle to the shaft (4).

9. A metering device in accordance with one of claims 3 to 7, **characterised in that** the metering shaft (4) has two coupling members (5) spaced from one another, and is displaceable in three positions in such a manner that either only the coarse-metering wheels (1a, 1b), or only one precision-metering wheel (2b), or both precision-metering wheels (2a, 2b) are connected to the metering shaft (4) in a rotationally rigid manner.

10. A metering device in accordance with one of claims 1 to 9, **characterised in that** discs (12, 13, 14) are arranged between adjacent metering wheels (1, 2).

11. A metering device in accordance with one of claims 1 to 10, **characterised in that** at least one resilient member (15) is mounted on the casing (3) and the free end thereof rests against the metering wheels (1, 2).

12. A metering device in accordance with claim 11, **characterised in that** the free end of the resilient member (15) is formed as a cleaning edge which can be inserted into the recesses (10, 11).

13. A metering device in accordance with one of claims 1 to 12, **characterised in that** the metering device is built into a pneumatic distributing device, the metering wheels (1, 2) being arranged in the inlet region of a delivery and/or distribution pipe (16).

14. A metering device in accordance with one of claims 1 to 13, **characterised in that** an agitator (17) is arranged in the casing (3) above the metering wheels (1, 2).

15. A metering device in accordance with claims 13 or 14, **characterised in that** a shut-off valve (18) is provided in the outlet region of the metering wheels (1, 2) to the delivery pipe (16), to allow the discharge of the seed delivered by the metering wheels (1, 2).

16. A metering device in accordance with one of claims 1 to 15, **characterised in that** the casing includes an emptying bar and/or emptying valve (19) in the region of admission to the metering wheels (1, 2).

17. A metering device in accordance with one of claims 1 to 16, **characterised in that** the metering shaft (4) can be driven with a variable rotational speed.

18. A metering device in accordance with one of the claims 1 to 17, **characterised in that** a separating wall (20) is arranged in the delivery region of the metering wheels (1, 2) and is resiliently prestressed thereagainst.

19. A metering device in accordance with one of claims 13 to 18, **characterised in that** the metering equipment, the components of the casing (3) and the delivery pipe (16) are combined in one unit.

## Revendications

1. Dispositif de dosage pour une machine distributrice, de préférence un semoir ou un épandeur de fumier, comportant au moins respectivement une roue de dosage grossier ou normal (1) et une roue de dosage fin (2), qui sont montées rotatives dans un carter (3) et peuvent être entraînées par un arbre de dosage (4), caractérisé en ce que l'arbre de dosage (4) est déplaçable dans la direction axiale par rapport aux roues de dosage (1,2) et au carter (3), et comporte au moins un élément d'accouplement (5), qui peut être amené au choix en prise avec l'une ou l'autre des roues de dosage (1,2).

2. Dispositif de dosage selon la revendication 1, caractérisé en ce que l'élément d'accouplement (5) est agencé sous la forme d'un élément profilé polygonal, qui s'étend sur une zone axiale prédéterminée de l'arbre de dosage et que la partie du moyeu (6,7) de chaque roue de dosage (1,2) présente un évidement (8,9) adapté à l'élément profilé polygonal.

3. Dispositif de dosage selon la revendication 1 ou 2, caractérisé en ce qu'il est prévu côte-à-côte deux roues de dosage grossier (1a,1b), sur la face frontale extérieure de chacune desquelles est disposée respectivement une roue de dosage fin (2a,2b).

4. Dispositif de dosage selon l'une des revendications 1 à 3, caractérisé en ce que les roues de dosage (1,2) présentent chacune, sur leur surface extérieure, des cellules axiales (10,11).

5. Dispositif de dosage selon la revendication 3, caractérisé en ce que les roues de dosage grossier (1a,1b) sont reliées entre elles avec blocage en rotation.

6. Dispositif de dosage selon la revendication 4, caractérisé en ce que les roues de dosage grossier (1a,1b) sont décalées l'une par rapport à l'autre d'une distance égale à la moitié du pas des cellules (10).

7. Dispositif de dosage selon la revendication 4 ou 6, caractérisé en ce que les cellules (11) des roues de dosage fin (2a,2b) sont décalées les unes par rapport aux autres d'un demi pas.

8. Dispositif de dosage selon l'une des revendications 4,6 ou 7, caractérisé en ce que les cellules (10,11) des roues de dosage (1a,1b, 2a,2b) sont disposées de manière à s'étendre obliquement par rapport à l'axe (4).

9. Dispositif de dosage selon l'une des revendications 1 à 7, caractérisé en ce que l'arbre de dosage (4) comporte deux éléments d'accouplement (5) distants l'un de l'autre et est déplaçable dans trois positions de telle sorte que soit seulement les roues de dosage grossier (1a,1b), soit seulement une roue de dosage fin (2b), soit les deux roues de dosage fin (2a,2b) sont reliées avec blocage en rotation à l'arbre de dosage (4).

10. Dispositif de dosage selon l'une des revendications 1 à 9, caractérisé en ce que des disques (12,13,14) sont disposés entre des roues de dosage voisines (1,2).

11. Dispositif de dosage selon l'une des revendications 1 à 10, caractérisé en ce que, sur le carter (3), est monté au moins un élément à ressort (15) dont l'extrémité libre s'applique contre les roues de dosage (1,2).

12. Dispositif de dosage selon la revendication 11, caractérisé en ce que l'extrémité libre de l'élément de ressort (15) est réalisée sous la forme d'une arête de nettoyage pouvant être insérée dans les cellules (10,11).

13. Dispositif de dosage selon l'une des revendications 1 à 12, caractérisé en ce que le dispositif de dosage est monté dans un dispositif distributeur pneumatique, les roues de dosage (1,2) étant disposées dans la zone d'entrée d'un tube de convoyage ou de distribution (16).

14. Dispositif de dosage selon l'une des revendications 1 à 13, caractérisé en ce qu'un arbre d'agitation (17) est disposé dans le carter (3) au-dessus des roues de dosage (1,2).

15. Dispositif de dosage selon la revendication 13 ou 14, caractérisé en ce que, dans la zone de sortie des roues de dosage (1,2) en direction du tube de convoyage (16) il est prévu un volet pivotant (18) permettant l'évacuation de la semence entraînée par les roues de dosage (1,2).

16. Dispositif de dosage selon l'une des revendications 1 à 15, caractérisé en ce que, dans la zone d'entrée aboutissant aux roues de dosage (1,2), le carter (3) comprend un tiroir de vidage ou un clapet de vidage (19).

17. Dispositif de dosage selon l'une des revendications 1 à 16, caractérisé en ce que l'arbre de dosage (4) peut être entraîné avec une vitesse de rotation variable.

18. Dispositif de dosage selon l'une des revendications 1 à 16, caractérisé en ce que dans la zone d'évacuation des roues de dosage (1,2) est disposée une paroi de séparation (20) précontrainte élastiquement entre ces roues.

19. Dispositif de dosage selon l'une des revendications 13 à 18, caractérisé en ce que l'appareil de dosage, des parties du carter (3) et le tube de convoyage (16) sont réunis pour former une unité.
